# EUROPEAN PATENT SPECIFICATION

(11) **EP 4 486 696 B1**
(45) Date of publication and mention of the grant of the patent: **04.02.2026**
(21) Application number: 22716475.3
(22) Date of filing: 03.03.2022
(51) Int. Cl.: C01B 32/318, C01B 32/336

(54) **A PROCESS FOR MANUFACTURING FUNCTIONALIZED ACTIVATED NANOPOROUS CARBON AND USE THEREOF**
VERFAHREN ZUR HERSTELLUNG VON FUNKTIONALISIERTEM AKTIVIERTEM NANOPORÖSEM KOHLENSTOFF UND VERWENDUNG DAVON
PROCÉDÉ DE FABRICATION DE CARBONE NANOPOREUX ACTIVÉ FONCTIONNALISÉ ET SON UTILISATION

(43) Date of publication of application: 08.01.2025
(73) Proprietor: Anunine Holdings (Private) Limited, Panadura 12500 (LK); University of Sri Jayawardenepura, Nugegoda 10250 (LK); National Research Council, Colombo 07 00700 (LK)
(72) Inventor: MADHUSHA, Chamalki, Gangodawila Nugegoda 10250 (LK); MUNAWEERA, Imalka, Gangodawila Nugegoda 10250 (LK); PERERA, Chandani, Peradeniya 20400 (LK); WEERASINGHE, Kavindya, Gangodawila Nugegoda 10250 (LK); JAYASINGHE, Sehan, Gangodawila Nugegoda 10250 (LK); PERERA, Idangodage Yugantha Chathuranga, Athurugiriya 10150 (LK); DODANGODA, Tissa, Moratuwa 10400 (LK); KALPAGE, C.s., Peradeniya 20400 (LK); KOTTEGODA, Nilwala, Gangodawila Nugegoda 10250 (LK)
(74) Representative: Fournier, Kevin
(86) International application number: PCT/IB2022/051863
(87) International publication number: WO 2023/166331

(56) References cited:
- US-A- 6 057 262
- US-A1- 2013 190 542
- US-A1- 2017 226 535
- DATABASE WPI Week 201667, Derwent World Patents Index; AN 2016-49333T, XP002807802

## Description

### FIELD OF INVENTION

This invention relates to a process of manufacturing functionalized activated nanoporous carbon and using said activated nanoporous carbon for purification of drinking water.

### BACKGROUND OF THE INVENTION

As the world population is increasing at a rapid pace and available resources are depleting at an alarming rate, mankind has arrived at a critical juncture where portable water availability has reached its limitations. In the world, 2.2 billion people suffer from the lack of access to safely managed drinking water services. Herein, the real challenge in front of authorities, governments and scientists is to make the planet self-sufficient with pure drinking water not only for its present residents but also for the generations yet to come in billions. As obvious as it seems, solutions can be found to this problem using two approaches. First, establish easy and cheap ways of purifying drinking water with the aim of having safe drinking water for everyone. Secondly, minimize or terminate harmful human activities making sure that human intervention has no effect on the quality of the drinking water. The key driving force to achieve these two goals is development of efficient and affordable water purification methods and desalination.

There are many types of water treatment technologies available for drinking water treatment and among the many materials, use of adsorbent materials is the most common. Activated carbon (AC) derived from various biomass sources has generally been used in such applications. AC contains high porosity classified as micro-pores (pore size < 2 nm), meso-pores (pore size 2-50 nm) and macro-pores (pore size>50 nm) while carbonaceous materials rich with surface functional groups have recently opened up opportunities for advanced filter systems.

The key factors governing physico-chemical characteristics of activated carbon are type of feedstock, pyrolysis conditions, value addition/ surface modifications and synthesis method. The most suitable feedstock types should contain lignocellulosic components i.e., lignin, cellulose and hemicellulose and the selected biomass is coconut coir dust which is considered as a waste in the coconut industry. Pyrolysis is best described as a process where substances are thermally decomposed under oxygen-deficient conditions. Generally, pyrolysis consists of three reactive stages: moisture evaporation, primary decomposition (the decomposition of biomass occurs in this stage in the temperature range of 200-400 °C as a result of which solid char is formed) and secondary reactions (these reactions take place in the solid matrix which is followed by a temperature increment). Several pyrolysis methods such as slow pyrolysis, fast pyrolysis, flash pyrolysis, torrefaction, hydrothermal conversion and gasification have been used to manufacture activated carbon on a commercial scale. In particular, value addition to activated carbon surface can be achieved by increasing the surface sorption sites by introducing new surface functional groups or by oxidation of existing surface functional groups, increasing the surface area by demineralization and removal of trapped constituents pore wall destruction in order to increase pore volume. Synthesis methods are also very important when it comes to energy consumption. In the recent past, attempts have been made to use microwave assisted methods to synthesize activated carbon and the method allows controlling the structural and morphological characteristics of activated carbon within a short period of time compared to the conventional pyrolysis process.

Over the past decades many attempts have been made to develop functionalized activated carbon from different precursor materials in order to use in wastewater treatment, drinking water purification and gas adsorption applications. However only little success have resulted in the previous attempts to use activated carbon in drinking water applications due to complex procedures and usage of high amounts of chemical activating agents in activated carbon preparation. JP patent application JP 2014205143A, Richard et al disclose the synthesis of acid impregnated activated carbon, which can be produced by converting a carbonaceous material into an activated carbon matrix by injecting an acid (sulfuric, hydrochloric, phosphoric and nitric acids) into the activated carbon matrix. This acid functionalized activated carbon is specifically used for removing ammonia from air mixture and this method is consuming a high amount of acids for the chemical activation. US 2013/190542 A1, US 6 057 262 A, CN 105 819 443 A and US 2017/226535 A1 disclose methods for making active carbon comprising a chemical activation and a physical activation. Adam M. Redding discloses the preparation of mesoporous activated carbon by using coconut shell through calcium catalyzed process. Further, a method of producing high-surface activated carbon by contacting char with KOH for one hour at an activation temperature ranging from 700 °C to 900 °C is disclosed by Romanos et al in US patent application 9517445B2. It could be obtained activated carbon with higher BET surface area with better physical properties.

On the other hand, a portable water purifying system that utilizes AC is not very common while the need for portable water treatment systems for providing potable water at remote locations is indispensable. This requirement exists, for example, in remote locations where potable water supply is not readily available. Similarly, portable water systems are often required in the aftermath of disasters such as earthquakes, floods and droughts where the local water supply has been totally contaminated or disrupted. Recreational activities such as camping, hunting, hiking activities and field visits for extended periods often make it impractical for the people to carry adequate quantities of potable water. In these situations, some effective and simple method of treating local water supplies becomes necessary. In the US patent application 6767453B2, Eric L. Lifschitz discloses means for the purification of a fluid by ultraviolet radiation. Tyran Adams revealed a filtration device which consists of ultraviolet, activated carbon and reverse osmosis filters, and an outlet opening extending through one of the walls then receives the treated water and releases the water from the filtration device. However, most of these methods use ultra violet radiation and include complicated filtration techniques with hightech involvement. On the other hand, Sajd et al have disclosed in a bag knotted with a cloth fiber from the upper edge and can be used for adsorption of pollutants from water. This device is low-cost, easy to fabricate, portable, simple to operate, and can be easily handled by the end user without any special technical requirements. Sealed enclosure (bag) removes representative PAH pollutants from water using multiwall carbon nanotubes (MWCNTs) or a mixture of MWCNTs and graphene as an adsorbent.

The novel process described herein is a different approach to synthesis of activated carbon by functionalization of coconut coir dust with minimum acid amount/steam. Then, the produced nano-carbon resulting from the activation process will be packed into a sachet membrane or to a column that can be fixed to a water tap. More significantly, this is a portable water purification system and thus the cost of production is lower than the previously reported methods.

### SUMMARY OF THE INVENTION

The invention discloses herein is a process for manufacturing functionalized activated nanoporous carbon as claimed in claim 1.

The process of manufacturing functionalized activated nanoporous carbon is comprised of providing a precursor cellulose/lignin matrix and functionalizing the said precursor cellulose/lignin matrix using a vapour bed with chemical vapour pressure 3.00 Pa to 5.00 Pa. The precursor cellulose matrix used in the present invention is coconut coir dust. The chemical vapour is derived from steam and phosphoric acid. The functionalized precursor cellulose/lignin matrix is then activated using pyrolysis with the temperature in the range of 450 °C - 550 °C in an inert atmosphere. This process of activation is carried out in a muffle furnace/microwave pyrolysis unit. The resulting solid from the said process is collected and washed using ultrasound energy to reach neutral pH. The pH neutral solid is then dried in an oven under the temperature of 90 °C.

The dried solid derived in the process is then grounded into fine powder or in to granules. The said power or granules will then be packeted in to membrane filter which is made of nylon, cellulose and/or combination thereof. This dried ground solid has nanoporous structure which facilitates water purification process and enables to remove hardness, fluorides, heavy metals and microbial pathogens in drinking water.

The membrane filters comprising the dried ground solid is a sachet packet and/or a packed column. These sachet packets are dipped in water bottles or water glasses in a similar manner as a tea bag is dipped in order to purify water. To facilitate effective dipping in water, a kaolinite ball is inserted in to the sachet packet containing the activated nanocarbon derived from the process disclosed herein. The sachet packet has to be placed in water at least for 20 to 60 minutes in order to purify water. The packed column comprising the activated nanoporous carbon can be fixed in to a water pipe or a tap.

### BRIEF DESCRIPTION OF THE FIGURES

**FIG.1** shows the activation apparatus of phosphate and hydroxy functionalized activated nanoporous carbon

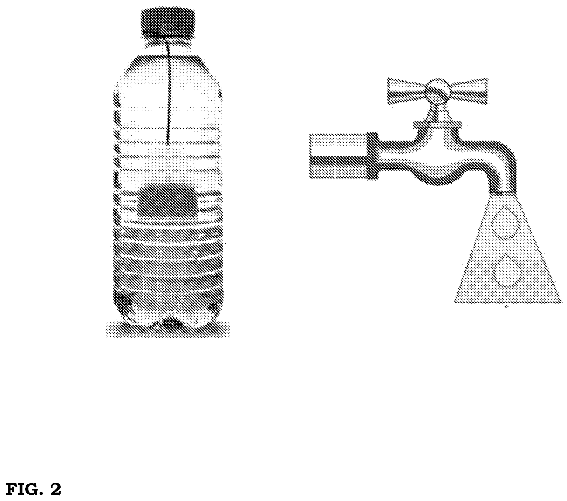

**FIG. 2** shows a side view of the invented filtering apparatus in a water bottle or attached into a water faucet.

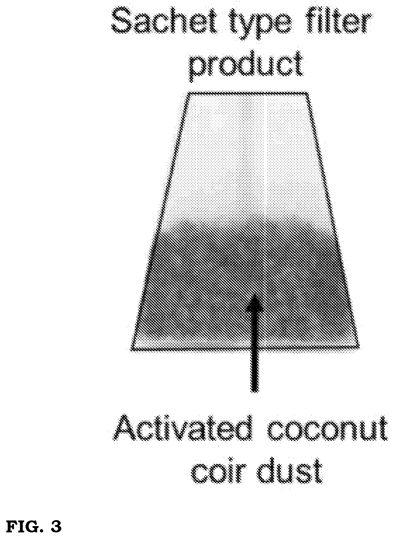

**FIG. 3** shows a side elevational view of a sachet type filtering apparatus with activated carbon (ACC) in the sachet bag.

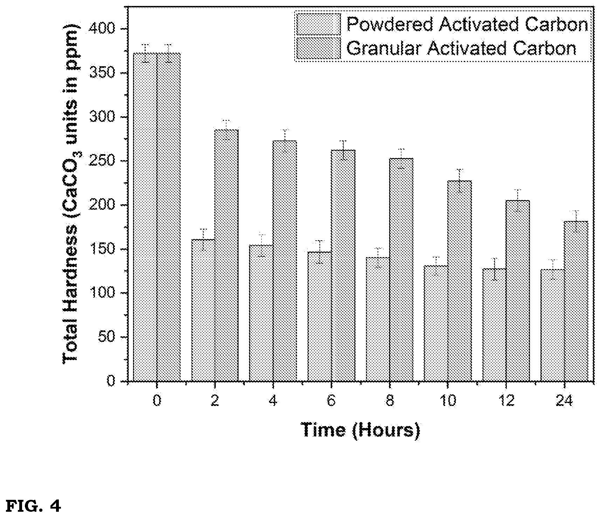

**FIG. 4** shows a graph representing the total hardness in water samples (in CaCO₃ units/ppm) after treatment with powdered and granular activated nanoporous carbon (1.000 g) in sachet bags at different time periods.

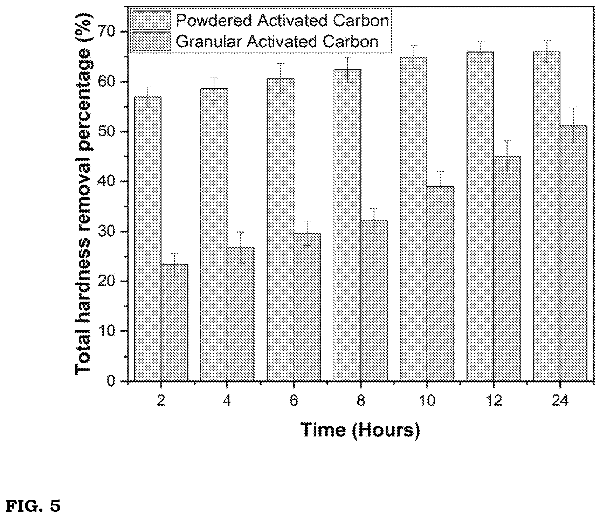

**FIG. 5** shows a graph representing the removal percentages of hardness in water samples after treatment with powdered and granular activated nanoporous carbon (1.000 g) in sachet bags at different time periods.

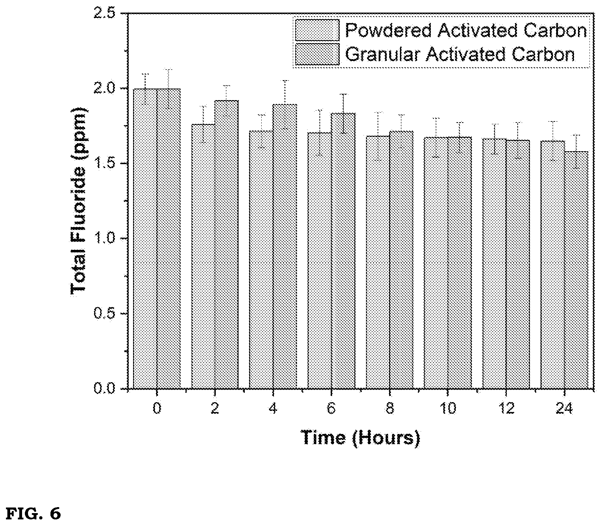

**FIG. 6** shows a graph representing the fluoride in water samples (in mg/ L) after treatment with powdered and granular activated nanoporous carbon (1.000 g) in sachet bags at different time periods.

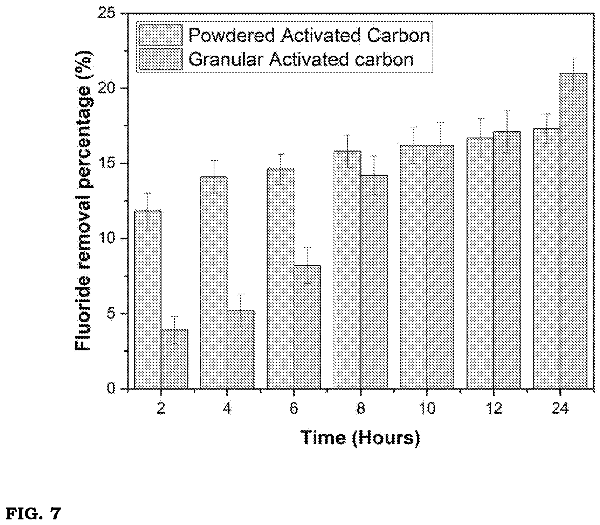

**FIG. 7** shows a graph representing the removal percentages of fluoride in water samples after treatment with powdered and granular activated nanoporous carbon (1.000 g) in sachet bags at different time periods.

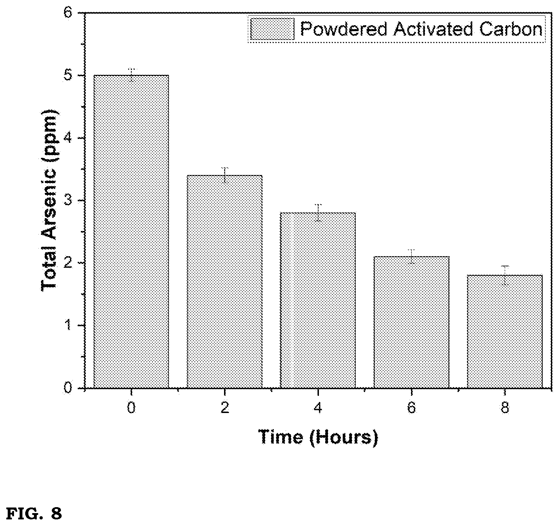

**FIG. 8** shows a graphical representation of heavy metal (Ar) removal in synthetic water samples (in mg/ L) after treatment with powdered activated nanoporous carbon (1.000 g) at different time periods.

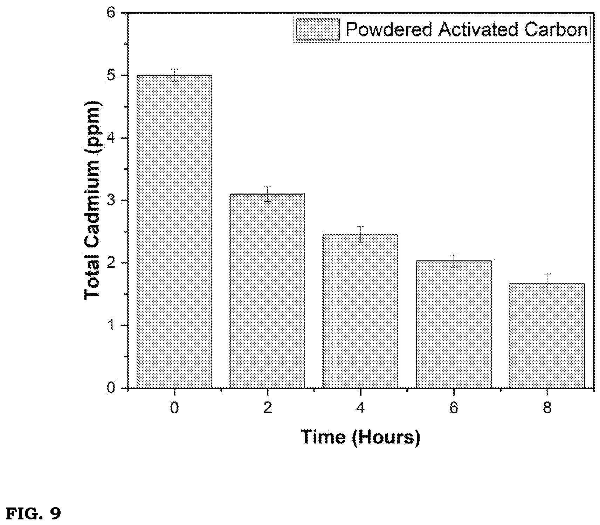

**FIG. 9** shows a graphical representation of heavy metal (Cd) removal in synthetic water samples (in mg/ L) after treatment with powdered activated nanoporous carbon (1.000 g) at different time periods.

### DETAILED DESCRIPTION OF THE INVENTION

### Technical problem

Globally, presence of hardness, heavy metals (Cd, Hg, Pb, As) and fluoride ions in drinking water sourced from ground wells and surface water bodies lead to different health complications. They are assumed to be culprits of diseases such as chronic kidney disease with unknown etiology (CKDu) in some Asian countries. Reverse osmosis (RO) filters at regional level have been widely used in many countries to overcome major issues in water purification such as water hardness, fluoride, heavy metals and salinity. But there are several drawbacks associated with RO filters such as removal of essential mineral ions present in drinking water and high cost which is not affordable by the under-privileged population. Therefore, globally there is an increased scientific attention to develop domestic level, low cost and portable water filters. The present invention discloses activated nanoporous carbon derived from waste coconut coir dust to utilize as a domestic filter material to remove hardness, heavy metals, salinity and fluoride in drinking water.

### Technical Solution

The present invention discloses a simple and low-cost method which is capable of removal of hardness, fluoride, salinity, toxins and heavy metals in groundwater. A chemically functionalized nanoporous activated carbon derived from coconut coir dust has been packed into a membrane (a sachet packet like a tea bag) or to a plastic column which could be attached to a domestic water tap. This method can be introduced to school water bottles, water bottles used in field activities and domestic water systems. It can be implemented at any location where there is no electric power or any sophisticated purification systems.

This disclosure relates to an easy method of purifying drinking water using a small sachet packet or a filter unit which could be attached to a tap, consisting of powdered or granular, hydroxy and phosphate functionalized activated nanoporous carbon derived from waste coir dust. The recommended vapour treatment method for coconut coir dust leads to functionalization of coir with hydroxyl and phosphate groups and the inert environment pyrolysis leads to formation of activated nanoporous carbon network. The activated nanoporous carbon can be used for removing hardness, fluoride and heavy metals present in drinking water. The material is incorporated into a membrane filter (a sachet packet similar to a tea bag) or packed into a column which could be attached to a domestic water tap. The proposed portable filters could be introduced at domestic level in rural areas where large scale water purification units are not available. Therefore, this product would establish availability of universal and equitable access to safe and affordable drinking water for all.

When the cost effectiveness of the product is considered, the production process is not a complicated one. The main raw material is waste coconut coir. For intermediate activation agents, phosphoric acid vapor and saturated steam is used. The steam generation system (boiler setup) is simple. Boiler is directly connected to the activation unit. It does not consist of headers and distribution lines. Therefore, considering all the factors the present invention can be manufactured in a cost-effective manner in the industrial scale.

### Engineering background

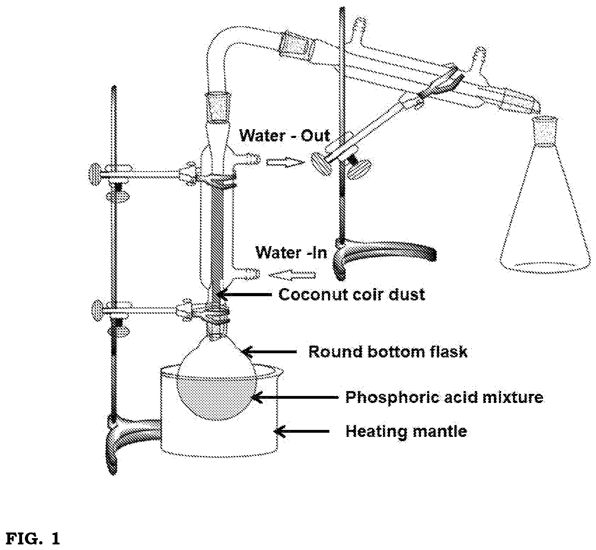

Coconut coir dust is functionalized by phosphate and hydroxyl groups using a vapor bed prepared according to FIG 1. Then, the functionalized coconut coir is activated under a specific temperature ramp, in an inert atmosphere. The resulting activated nanoporous carbon is packed into a sachet type membrane or a plastic column which could be directly connected to a water tap. The efficacy of the materials is tested for removal of hardness, fluoride and heavy metals. Time needed to bring the heavy metal, hardness and fluoride level to WHO approved levels was studied under dynamic and static conditions.

### Advantages

This novel method of making water filter material using phosphate and hydroxy functionalized activated nanoporous carbon has many advantages over other conventional and currently available high-tech water filters.
- Activation of hydroxyl and phosphate groups functionalized coconut coir leads to an improved surface area leading to formation of activated nanoporous carbon matrix with ability to remove hardness, heavy metals and fluoride ions in drinking water efficiently. The resulting material is packed into a sachet type filter membrane or plastic column which could be attached to a domestic water tap leading to a simple and portable water filter..
- The filter is portable and could be used anywhere to get purified water.
- The manufacturing process is easily scalable.
- Uses a minimum amount of acid and energy in the synthesis process, making the process commercially viable, green and sustainable thus introducing a minimum carbon footprint.
- Produces minimum waste for production, thus making this process environmentally friendly.

### Mode for invention

As defined herein, is a multi-purpose portable water filter to remove hardness, heavy metals and fluoride ions, to be used as an efficient filter material replacing advanced and expensive water purification methods. The present invention utilizes readily available biomass, coconut coir dust as the precursor to generate a functional activated carbon matrix containing pores ranging from micro-meso-nano (1 micrometre to 1 nm). Firstly the coconut coir dust is functionalized using steam followed by an acid, or combination of acids. The acid vapor functionalization herein refers to initiating a chemical reaction between the vapor of an acid and the lignin functional groups. The acid vapor functionalization is done using strong or weak acids such as phosphoric acid, sulphuric acid, hydrochloric acid and nitric acid and mixture of aforementioned acids as well. The coconut coir dust functionalized is done through acid vapor for 30 min. The time may vary from 30 min - 2 h. The functionalization can also be done by microwave assisted method instead of using the steam/acid vapour. The microwave functionalizing may be carried out for 5 min at 60 °C. Activation (Pyrolysis) of a biomass is then carried out under an inert atmosphere for one hour at a temperature of 500 °C. The activation time may vary from 1 h - 3 h at a constant temperature or temperature ramp between 400 °C - 700 °C. Inert atmosphere can be generated by purging nitrogen or argon gas. Pyrolysis of functionalized coir leads to cleavage of aryl ether bonds, which is resulting in the formation of ketone groups, while releasing CO and CO₂ as volatile products leading to formation of a highly porous structure. Further, the functional groups such as hydroxyl, phosphate, sulphate easily bind with the functional groups of lignin inside the pores. The presence of these functional groups will facilitate the removal of hardness, heavy metals such as Pb²⁺, Cd²⁺, arsenate, and fluoride and other cations present in the water. The nano-carbon resulting from the activation process can be packed into a sachet membrane or to a column that can be fixed to a water tap. The sachet packet/column may contain 0.1 - 5 g of functionalized activated nanoporous carbon. The contact time for purification of water to WHO recommended level will be 15 min - 90 min depending on the type of water. The filter can be used at domestic level or in portable water storage bottles.

### Examples

### Functionalization and activation of coconut coir dust - Steam functionalization method

Coconut coir dust was thoroughly washed and dried. The dried coconut coir was subjected to steam functionalization for one hour followed by treatment with phosphoric acid vapor for one hour. After that, the steam and phosphoric acid vapor treated coconut coir was pyrolyzed using the muffle furnace (under nitrogen gas atmosphere) and the powdered coir at 500 °C for 1 h. The resulting solid was sieved using a sieving bed. The resulting solid was characterized using powder X-ray diffraction, Fourier Transform Infra-red spectroscopy, BET surface analysis, methylene blue number and iodine number.

### Functionalization and activation of coconut coir dust - Microwave functionalization method

Washed and dried Coconut coir dust was subjected to microwave irradiation for 5 minutes at 60 ⁰C with diluted phosphoric acid in a silicon carbide vessel. Thereafter, phosphoric acid treated coconut coir dust under microwave irradiation was pyrolyzed using the muffle furnace (under nitrogen gas atmosphere) and the powdered coir at 500 °C for 1 h. The resulting solid was characterized using aforementioned characterization techniques.

### Removal efficiency of hardness in water

All the adsorption experiments were conducted using 1.000 g of activated carbons (powdered or granular) with 250.0 ± 0.1 mL of hard water collected from Weerapura in Polonnaruwa district in Sri Lanka. After 2, 4, 6, 8, 10, 12 and 24 hour durations, hardness in the treated water samples was analyzed using the Atomic absorption spectroscopic method (ASTM D 511-14).

### Removal of fluoride in water

All the adsorption experiments were conducted using 1.000 g of activated carbons (powdered or granular) with 250.0 ± 0.1 mL of hard water collected from Weerapura in Polonnaruwa district in Sri Lanka. After 2, 4, 6, 8, 10, 12 and 24 hour durations, fluoride concentration in the treated water samples was analyzed using the fluoride ion selective electrode (ASTM D1179-16).

### Removal efficiency of heavy metals in water

All the adsorption experiments were conducted using 1.000 g of activated carbons (powdered) with 250.0 ± 0.1 mL of synthetic water. (Ar and Cd) After 2, 4, 6, and 8 h durations, heavy metal concentration in the activated carbon treated water samples was analyzed using the Atomic absorption spectroscopic method.

## Claims

1. A process for manufacturing functionalized activated nanoporous carbon, wherein the process comprising the steps of;
- providing a precursor cellulose/lignin matrix, the precursor cellulose matrix is coconut coir dust;
- functionalizing the precursor cellulose/lignin matrix using a vapour bed with chemical vapour pressure 3.00 Pa to 5.00 Pa, the chemical vapour is derived from steam and phosphoric acid;
- activating the functionalized precursor cellulose/lignin matrix using pyrolysis with the temperature in the range of 450 °C - 550 °C in an inert atmosphere;
- collecting the resulting solid and washing the solid using ultrasound energy to reach neutral pH;
- drying the pH neutral solid in an oven under the temperature of 90 °C.

2. The process of claim 01, comprising the further step of grinding the dried pH neutral solid into fine powder and/or into granules.

3. The process of claims 01 and 02, comprising the further step of incorporating the dried ground solid and/or granules into a membrane filter, the membrane filter is made of nylon, cellulose and/or combination thereof.

4. The process of claims 01 and 02, comprising the further step of fixing the dried ground solid and/or granules in to a filter unit.

5. The process of claim 01, wherein the step of activation is carried out in a muffle furnace/ microwave pyrolysis unit.

## Patentansprüche

1. Verfahren zur Herstellung von funktionalisiertem aktiviertem nanopösem Kohlenstoff, wobei das Verfahren die folgenden Schritte umfasst:
• Bereitstellen einer Cellulose-/Lignin-Vorläufermatrix, wobei die Cellulose-Vorläufermatrix aus Kokosfaserstaub besteht;
• Funktionalisieren der Cellulose-/Lignin-Vorläufermatrix mittels eines Dampfbettverfahrens bei einem chemischen Dampfdruck im Bereich von 3,00 Pa bis 5,00 Pa, wobei der chemische Dampf aus Wasserdampf und Phosphorsäure abgeleitet ist;
• Aktivieren der funktionalisierten Cellulose-/Lignin-Vorläufermatrix durch Pyrolyse bei einer Temperatur im Bereich von 450 °C bis 550 °C unter inerter Atmosphäre;
• Sammeln des erhaltenen Feststoffs und Waschen des Feststoffs unter Anwendung von Ultraschallenergie bis zum Erreichen eines neutralen pH-Werts;
• Trocknen des pH-neutralen Feststoffs in einem Ofen bei einer Temperatur von höchstens 90 °C.

2. Verfahren nach Anspruch 01, ferner umfassend den Schritt des Mahlens des getrockneten pH-neutralen Feststoffs zu einem feinen Pulver und/oder zu Granulaten.

3. Verfahren nach einem der Ansprüche 01 oder 02, ferner umfassend den Schritt des Einbringens des getrockneten und gemahlenen Feststoffs und/oder der Granulate in einen Membranfilter, wobei der Membranfilter aus Nylon, Cellulose und/oder einer Kombination davon besteht.

4. Verfahren nach einem der Ansprüche 01 oder 02, ferner umfassend den Schritt des Fixierens des getrockneten und gemahlenen Feststoffs und/oder der Granulate in einer Filtereinheit.

5. Verfahren nach Anspruch 01, wobei der Aktivierungsschritt in einem Muffelofen oder in einer Mikrowellen-Pyrolyseeinheit durchgeführt wird.

## Revendications

1. Procédé de fabrication d'un carbone nanoporeux activé fonctionnalisé, ledit procédé comprenant les étapes consistant à :
• fournir une matrice précurseur de cellulose/lignine, ladite matrice précurseur de cellulose étant constituée de poussière de fibre de coco ;
• fonctionnaliser la matrice précurseur de cellulose/lignine au moyen d'un lit de vapeur sous une pression de vapeur chimique comprise entre 3,00 Pa et 5,00 Pa, ladite vapeur chimique étant issue de vapeur d'eau et d'acide phosphorique ;
• activer la matrice précurseur de cellulose/lignine fonctionnalisée par pyrolyse à une température comprise entre 450 °C et 550 °C, dans une atmosphère inerte ;
• collecter le solide obtenu et laver ledit solide par application d'une énergie ultrasonore jusqu'à l'obtention d'un pH neutre ;
• sécher le solide à pH neutre dans un four à une température inférieure ou égale à 90 °C.

2. Procédé selon la revendication 01, comprenant en outre une étape consistant à broyer le solide séché à pH neutre sous forme de poudre fine et/ou de granulés.

3. Procédé selon l'une quelconque des revendications 01 ou 02, comprenant en outre une étape consistant à incorporer le solide séché et broyé et/ou les granulés dans un filtre à membrane, ledit filtre à membrane étant constitué de nylon, de cellulose et/ou d'une combinaison de ceux-ci.

4. Procédé selon l'une quelconque des revendications 01 ou 02, comprenant en outre une étape consistant à fixer le solide séché et broyé et/ou les granulés dans une unité de filtration.

5. Procédé selon la revendication 01, dans lequel l'étape d'activation est réalisée dans un four à moufle ou dans une unité de pyrolyse par micro-ondes.
